# EUROPEAN PATENT APPLICATION

(11) **EP 4 358 569 A1**
(43) Date of publication of application: **24.04.2024**
(21) Application number: 22201938.2
(22) Date of filing: 17.10.2022
(51) Int. Cl.: H04W 24/02, H04L 41/147, H04W 16/20, G06N 20/00

(54) **CONTROLLING WIRELESS NETWORK PERFORMANCE IN AN INDUSTRIAL ENVIRONMENT**

(71) Applicant: Siemens Aktiengesellschaft, 80333 München (DE)
(72) Inventor: Sauer, Markus, 81739 München (DE); Zeiger, Florian, 85635 Höhenkirchen-Siegertsbrunn (DE)
(74) Representative: Siemens Patent Attorneys

(57) **Abstract**

The disclosed embodiments relate to a computer-implemented method for controlling an industrial wireless network operated in an industrial environment including processing facilities and processing materials. Continuous optimization of the radio characteristics ensures seamless operations in changing or dynamic environments wherein relocating materials and/or mobile production equipment have a dynamic impact on the radio characteristics. The disclosed embodiments allow for estimating a local and site-wide radio signal quality for a near future. Knowledge of a spatial distribution of the signal quality may be advantageously shared with mobile production units or other network elements in order to notify these units expected link restrictions or performance degradation in advance.

## Description

### TECHNICAL FIELD

The disclosed embodiments generally relate to the field of controlling or optimizing wireless networks. Specifically, the disclosed embodiments relate to a method of controlling an industrial wireless network.

### BACKGROUND

Industrial communication is increasingly operated over wireless networks. At the same time, industrial processes and equipment commissioned for industrial processes are increasingly being connected wirelessly. increased flexibility in industrial processes promotes emerging types of industrial concepts including fully automated warehouses or flexible production areas where production facilities may be frequently rearranged.

One commonality of these industrial concepts is that the industrial environment may significantly change over time, depending on the incoming and outgoing material, as well as the process state. Due to this continuously modified environment configuration, physical conditions of the industrial environment are accordingly subject to change. These changes affect the industrial wireless network including radio characteristics of wireless communication equipment involved in the formation of one or more segments of a local campus networks or the industrial wireless network in general.

Industrial operation of a wireless network system further involves a particular requirement in that wireless communication equipment needs to be changed frequently and exchanges need to be done rapidly. Rapid exchange operations usually require data driven network planning methods and preemptive data driven measures for reconfiguration of the wireless communication equipment during operations. Ideally, such equipment reconfiguration would be performed in a manner preventing the industrial wireless network from performance degradation or even failure or breakdown. At present, however, continuous planning and optimization schemes in industrial wireless network are still in their infancy.

Currently applied planning methods, however, are rather discontinuous. The current planning is based on a set of different radio network maps as a result of a multiplicity of radio signal strength measurements for a set of different situations. Ad-hoc Measurements for such radio network maps are taken at discrete times or snapshots. Accordingly, it is currently not possible to capture or assess a dynamic behavior of a wireless network operated in an industrial environment at runtime.

Still further, network management systems currently in use systems cannot be linked to industrial process equipment for supplying or evaluating process data, so that an alignment of the network configuration to expectable changes caused by changing production process is currently not possible and has not even been considered to date.

Accordingly, there is a need in the art for a continuous optimization of an industrial wireless network in order to ensure seamless operations of industrial wireless networks in changing or dynamic environments using in-line measurement data of present and future radio access protocols such as 5G or 6G campus networks.

### SUMMARY AND DESCRIPTION

The present invention relates to a computer-implemented method for controlling a wireless network operated in an industrial environment including processing facilities and processing materials, the wireless network including equipment for operating the wireless network and/or for being connected to the wireless network, the method comprising the steps of:
- retrieving a set of location data including at least one current location of at least one of said processing facilities and/or at least one current location of at least one of said processing materials;
- determining a performance basis indicator by assessing a first spatial model of radio characteristics of the wireless network using at least partially said set of location data;
- determining a set of relocation data including at least one relocation of at least one of said processing facilities and/or at least one relocation of at least one of said processing materials;
- determining a performance destination indicator by assessing a second spatial model of radio characteristics of the wireless network, the second spatial model being created by at least partially modifying said first spatial model using at least partially said set of relocation data;
- identifying a mismatch between said performance basis indicator represented by said first spatial model and said performance destination indicator represented by said second spatial model;
- on the occurrence of a mismatch, determining action data using the first and the second spatial model of radio characteristics of the wireless network, said action data identifying one or more configuration changes to be made to said industrial wireless network in order to reduce said mismatch; and;
- outputting said action data to change a configuration of said industrial wireless network to reduce said mismatch.

According to the invention, a set of location data and a set of relocation data is retrieved or determined. The set of location data includes a current location of at least one processing facility or equipment - or, more generally, network entity - and/or processing material. The set of relocation data includes at least one change of spatial coordinates due to a relocation or movement of said items.

Further on, a performance basis indicator and a performance destination indicator are determined. While the first indicator expresses radio characteristics of the »basis«, i.e. the wireless network wherein one or more items are located in an initial location, the second indicator expresses radio characteristics of the »destination«, i.e. the wireless network wherein one or more items are relocated to consecutive locations. The basis for deriving the performance basis indicator is a first spatial model of radio characteristics which is generated using said set of location data. The basis for deriving the performance destination indicator is a second spatial model of radio characteristics which is generated using said set of relocation data.

A spatial model of radio characteristics is established by assigning measured values of radio characteristics of the wireless network - e.g., a signal quality, a latency, a bit error rate, a network status, a frame error rate and/or a wireless network channel - to spatial (two-dimensional or three-dimensional) coordinates in order to assign one or more parameter radio characteristics to a spatial coordinate within the industrial environment.

Identifying a mismatch between the performance basis indicator and the performance destination indicator means, at first place, that the network characteristics have changed at some spatial coordinates due to a relocation. Whether these differences have a positive or negative effect or a mismatch on the network quality is preferably to be checked. If there is a need for optimization, action data is generated for identifying one or more configuration changes to be made to said industrial wireless network in order to reduce said mismatch.

The present embodiments further relate to a controller comprising a processor and a data storage device having stored thereon computer executable program code, which, when executed by the processor, causes the processor to perform the above method.

The present embodiments further relate to a controller for controlling a wireless network operated in an industrial environment including processing facilities and processing materials, the wireless network including equipment for operating the wireless network and/or for being connected to the wireless network, the controller comprising:
- a location data interface for retrieving a set of location data including at least one current location of at least one of said processing facilities and/or at least one current location of at least one of said processing materials;
- a processor for:
   - determining a performance basis indicator by assessing a first spatial model of radio characteristics of the wireless network using at least partially said set of location data;
   - determining a set of relocation data including at least one relocation of at least one of said processing facilities and/or at least one relocation of at least one of said processing materials;
   - determining a performance destination indicator by assessing a second spatial model of radio characteristics of the wireless network, the second spatial model being created by at least partially modifying said first spatial model using at least partially said set of relocation data;
   - identifying a mismatch between said performance basis indicator represented by said first spatial model and said performance destination indicator represented by said second spatial model;
   - on the occurrence of a mismatch, determining action data using the first and the second spatial model of radio characteristics of the wireless network, said action data identifying one or more configuration changes to be made to said industrial wireless network to reduce said mismatch; and;
- a network management interface for outputting said action data to change a configuration of said industrial wireless network.

### DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1:: illustrates a cooperation of various functional units for operating or optimizing a wireless network in an industrial environment; and;
- FIG. 2:: is a schematic process chart depicting a chronologically ordered exchange of control and data transfer transmissions amongst various functional units cooperating to operate or optimize the wireless network.

### DETAILED DESCRIPTION

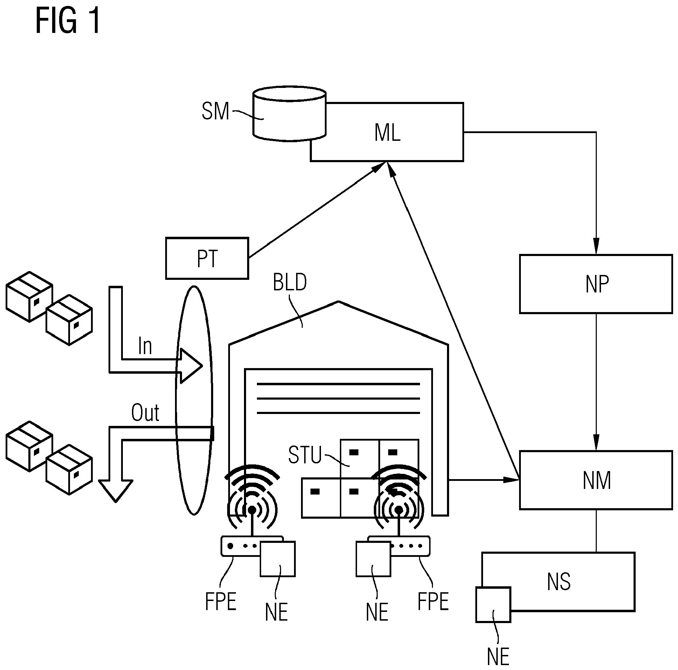

FIG. 1 illustrates an exemplary industrial environment in which a wireless network is to be operated essentially ubiquitously. The industrial environment may include both, indoor areas, and outdoor areas. The industrial environment as symbolized by a factory building BLD depicted in the drawing may be construed as a general site for industrial operations of any kind in which a wireless network is to be operated. Due to its ubiquity, the wireless network is not explicitly shown in the drawing.

For operating, participating, and using the wireless network, equipment for operating the wireless network and/or for being connected to the wireless network is provided, some of which is shown in the drawing only by way of example, while other equipment is omitted for the sake brevity. The wireless network may include mobile carrier networks such as known Long-Term Evolution (LTE) networks or more preferably upcoming fifth or sixth generation communication networks also known as 5G or 6G networks. A dedicated mobile carrier network available at a particular site, e.g. an enterprise campus, may be also referred to as campus network. Campus networks may provide a non-roaming 5G infrastructure with services accessible exclusively to dedicated user equipment or UE. Other types of network access - including Wi-Fi or WLAN, long-range wireless, millimeter waves, WiMAX or Worldwide Interoperability for Microwave Access according to IEEE 802.16 etc. - may also be utilized in place of or in combination with such mobile carrier networks.

In the representation of FIG. 1, stacked units STU are shown to symbolize process materials. These process materials may include, for example, bundles, containers or packages that contain raw material, semi-finished material, consumable material, tools, production aids etc. Furthermore, the process material may also include unpackaged bulk goods. The embodiments provide for the location of at least one - preferably each - of these process materials to be continuously determined and tracked.

The industrial environment may further include processing facilities - not shown in the drawing - such as manufacturing machines, production robots, production lines, automated guided vehicles or AGVs, cranes, forklifts etc. The embodiments provide for the location of at least one - preferably each - of these processing facilities to be continuously determined and tracked. Although location tracking in AGVs is already a matter of course for logistical reasons, such continuous location tracking may advantageously include largely immobile, »analogue« or even non-electrical objects such as shelves, storage racks, cabinets, etc.

While a determination of a location has so far only been provided as part of an incoming inspection of process materials or a corresponding outgoing inspection of finished products - as symbolized in the left section of FIG. 1 - modern production processes increasingly require knowing the whereabouts of materials and goods at all times. These developments favor a requirement of the present embodiments in using the time-continuous tracking of goods in order to optimize the overall radio characteristics of the wireless network.

Industrial environments are harsh for wireless communications compared to an office environment, not least due to the fact that they are dominated by various metal objects, such as production machines, storage racks, etc. These obstacles shadow radio propagations and cause coverage holes on desired areas thereby affecting the radio characteristics or even the availability of the wireless network. The industrial environment may change significantly over time, depending on incoming and outgoing materials and goods, as well depending on an actual process state e.g. pre-processing, set-up, maintenance, system replacement, ongoing operation etc.

Materials and goods generally affect the radio characteristics of the wireless network. In addition, autonomous or non-autonomous movements or relocations of materials and goods influence and change radio properties of the wireless network. This can be seen as a system-theoretical behavior of the network, i.e. as a system-theoretical response to a dynamic stimulus imposed by a relocation of materials and goods.

The present embodiments follow a general concept of combining regular measurements of radio characteristics of the wireless network with regular knowledge about the location of materials and goods affecting these radio characteristics of the wireless network.

Regular measurements may mean time-periodical measurements. Regular knowledge about the location of materials and goods may be attained by regularly or non-regularly retrieving and/or determining a set of location data. Within an industrial environment, the generic term of materials and goods may be specified to mean that processing facilities and processing materials are the decisive objects affecting the radio characteristics of an industrial wireless network.

Regular knowledge about the relocation of materials and goods may be achieved by the same aforesaid step followed by an additional step of identifying deviations between a current set of location data compared to its predecessor or compared to a historical set of location data.

Having made these introductory comments on some general concepts of the present embodiments, the description of FIG. 1 continues below. The building BLD depicted in FIG. 1 represents an industrial environment of any kind, preferably an industrial environment with flexible production areas and/or process areas.

To the left of the exemplary factory building BLD as shown in FIG. 1, a goods receipt IN and goods issue OUT are shown, in which incoming goods are received and finished goods are issued, respectively. While material tracking is already a matter of course in an incoming inspection, it may not be practiced yet throughout the industrial site. Flexible manufacturing processes of today, however, may be increasingly supportive of such continuous tracking.

Flexible manufacturing processes also entail a change from formerly immobile manufacturing equipment, which are becoming increasingly mobile. While AGVs have long been used for autonomous material transport to production equipment, the mobility requirements of flexible production now also cover the production equipment itself. The drawing shows two examples of mobile production equipment MPE. Since mobile production equipment MPE may operate autonomously or at least semi-autonomously, their position may be autonomously and continuously determined anyway and tracked by a central coordination instance.

To this end, the mobile production equipment units MPE may act as a client of the wireless network, the client being symbolized by an antenna radiating a northbound vertical beam lobe. Static or immobile production equipment - not shown in the drawing - or mobile production equipment MPE may be equipped to exclusively or additionally act as an access point which is symbolized by two horizontally opposite beam lobes. In general, equipment for being connected to the wireless network or user equipment UE and equipment for operating the wireless network may be provided by or installed on mobile production equipment MPE, e.g. placed on AGVs or as working equipment of employees.

Other kind of network elements may be embodied as immobile or static radio equipment, e.g., 5G base station, Wi-Fi access point or other industrial network elements such as switches or routers. These and other equipment for operating the wireless network and/or for being connected to the wireless network are individually referred to as network entity NE or in their entirety as a network system NS.

The drawing exemplarily symbolizes a separate network entity NE being assigned to a mobile production equipment MPE, so that the mobile production equipment MPE may be technically interpreted as a mere mobile unit being equipped with a network entity NE. Alternatively, a mobile production equipment MPE may be understood as a monolithic entity inseparably including the function of a network entity NE.

The network system NS may represent all communication equipment configured for operating the wireless network and/or for being connected to the wireless network, as well as logical connections of the equipment along with its users, configuration parameters etc.

A network management NM, in turn, is capable of reading out parameters or measurements from equipment of the network system NS and configuring selected equipment in the network system NS. Measurement date may be forwarded to a modelling and learning component ML.

A process tracking component PT retrieves location data of processing facilities and/or processing materials and keeps track of relocations of said processing facilities and/or processing materials. The process tracking component PT collects data in incoming and outgoing material flows and may forward these data the modelling and learning component ML.

The modelling and learning component ML may use location data of processing facilities and/or processing materials including data on incoming and outgoing material (e.g., type, size, pieces, packaging, ...) for the process. The modelling and learning component ML may further use system models SM providing information of present and future locations or relocations - e.g. changes in the position - changes of processing facilities and/or production or processing materials. The modelling and learning component ML may use data provided by the network management NM, e.g. radio characteristics of the wireless network such as link and channel characteristics of static or mobile production equipment MPE or from mobile network elements in general, e.g. generic user equipment or UE.

System models SM, in general, represent behavioral data of the industrial process and its environment providing current location data of processing facilities and/or processing materials. Said system models SM may further provide building plans, maps or structural data such as a local reference for data points. Said system models SM may further provide current or planned positions of processing facilities and/or processing materials and a scheduled transport route for relocation.

In a network planning component NP a planning engine is embodied for interfacing all static and mobile network elements
- such as mobile production equipment MPE - for configuration deployments, reconfiguration, and remote maintenance via the Network Management NM. The network planning component NP computes device specific configurations based on target settings received from the modelling and learning component ML and deploys changes via the network management NM to dedicated elements of the networks system NS.

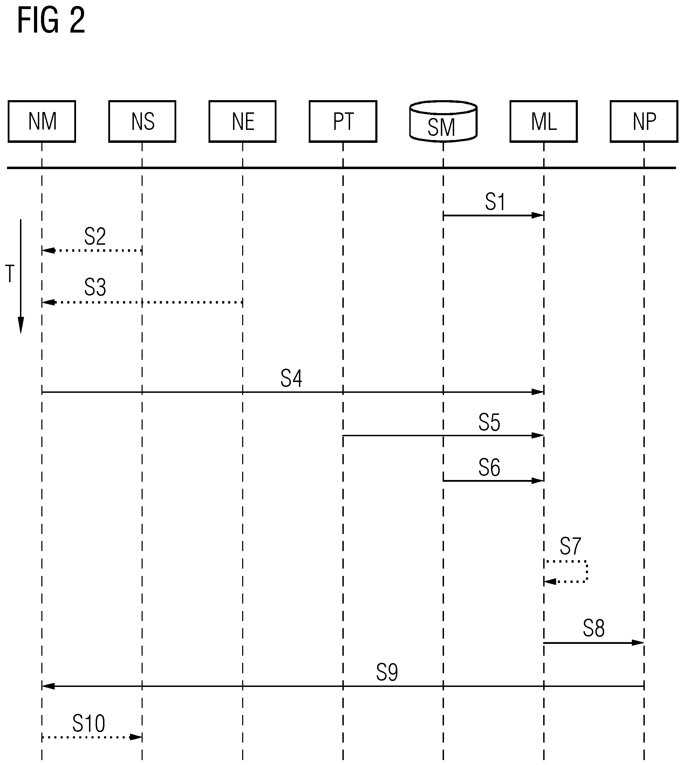

According to an embodiment, an exemplary method of controlling a wireless network is executed wherein the wireless network may include functional units as described above or, more generally, include equipment for operating the wireless network and/or for being connected to the wireless network. FIG. 2 is a schematic process chart depicting an exemplary and chronologically ordered exchange of control and data transfer amongst various functional units cooperating to optimize the wireless network. The functional units involved in the exemplary exchange of control and data transfer include the network management NM, the network system NS, one or more network elements NE, the process tracking component PT, a system model database SM, the modelling and learning component ML and the network planning component NP.

A timeline T is shown on the left side of FIG. 2 in which consecutive points in time are chronologically ordered such that later points in time are further down than earlier points in time. For each of the functional units a respective vertical dashed line is plotted in order to illustrate a message exchange of the respective functional unit in relation to the point in time.

In a first step of the exemplary method, current location data and relocations data is retrieved. This step may include a retrieval of current locations of the equipment, current locations of material, and current process states. To this end, systems models referring to static and physical models
- including, e.g., floor plans, structures etc. - are transferred by a first data transfer S1 from a system model database SM to the modelling and learning component ML. In a second data transfer S2, the network management NM receives data on link performances and localization data provided from the network system NS. In a third data transfer S3, the network management NM receives data on radio characteristics and localization data provided by a plurality of network elements NE. In a fourth data transfer S4, the network management NM sends the measurement data received by the preceding data transfers D2, S3 to the modelling and learning component ML. In a fifth data transfer S5, the process tracking component PT sends location and relocation data - e.g. information on incoming and outgoing material - to the modelling and learning component ML. In a sixth data transfer S6, systems models SM referring to information on material flow details and equipment status are transferred to the modelling and learning component ML.

In a second step, link and channel characteristics - or, more generally, radio characteristics - are assessed based on current locations of the equipment, current locations of material, and the process state. By a seventh data transfer S7 a possibly recurring computation and/or prediction of network behavior and estimation of network configuration options is accompanied inside the modelling and learning component ML.

In a third step, a model for link and channel characteristics is created or an existing model for link and channel characteristics is updated in order to form a link and channel model. The model may particularly include a spatial model of radio characteristics of the wireless network using location data from the preceding steps.

In a fourth optional step, planned process states are retrieved.

In a fifth step, near future material flows are retrieved or derived from system models of production process. At least one relocation of processing facilities and/or said processing materials may be retrieved.

In a sixth step, the expected link and channel model based on the previously updated link and channel model is computed.

In a seventh step, optimization of the network system is triggered for the case that link and channel deviations have been detected. A deviation may be assessed by determining a performance basis indicator - expressing the status quo - and a performance destination indicator - expressing the future situation - and an occurrence of a mismatch of both performance indicators. Thereupon, action data may be generated for identifying one or more configuration changes to be made to said industrial wireless network in order to reduce said mismatch.

In an eighth step, an optimization is carried out using the system models of the network elements NE, the system model of the link and channel characteristics, and topology information of the system model of the environment in order to calculate suitable settings for the network elements NE of the network system NS.

In a ninth step, the result of the optimization - e.g., amended or changed settings for the network elements NE of the network system NS - are sent to the network planning component NP in an eighth data transfer S8. In a ninth data transfer S9 the network planning component NP transmits a configuration update request along with updated configuration data and/or configuration artefacts to the network management NM which, by a tenth data transfer S10 forwards the updated configuration data to the network system NS along with a request to accomplish the configuration changes.

In the following sections, a fully automated warehouse - frequently referred to as »smart warehouse« - as a particular example for an industrial environment is described.

In a fully automated warehouse, material is stored according to given optimization routines available in the system model of the process. The process in this use case is obviously a pure logistics process. AGVs and other automated vehicles, e.g., shuttles, rail-based systems etc. are used to transport material and communicate via radio links with a central control or with other industrial network elements.

The status of the storage area is »measured« with the position and type of the stored goods and a map of the radio signal strength and the channel characteristics (e.g., link speed, packet losses, delays). The map of the radio signal strength is updated continuously while AGVs are moving. With changing types of goods stored at different locations - goods are delivered and leave the storage area, as well as new goods are coming in - the modelling component can estimate a future network behavior. Therefore, the status of the storage is used as baseline.

Process information is fused with knowledge on behavior of the radio map (e.g., based on previous measurements of the radio signal, or based on calculations) as well as current positions of the AGVs (also AGVs will influence the radio signal propagation) to estimate the future radio signal map for the storage area.

Process information may include data about planned incoming goods, planned goods to be delivered and/or the storage management strategy. A »behavior« of the radio map may be assessed by evaluating a spatial model of radio characteristics of the wireless network and its predecessor.

Based on the results of that estimation, networking components and radio equipment configurations may be installed or updated just before new goods arrive for storage or goods are leaving the warehouse in order to ensure proper continuous operations of the network and the mobile warehouse equipment, respectively.

In the following, an influence of goods and their storage on the radio characteristics of the wireless network is illustrated. It is exemplarily supposed that the stacked units STU of FIG. 1 are metal boxes which, over time, have formed a tunnel or a kind of street canyon for moving storage equipment. Radio signals inside this tunnel are not being disturbed by neighboring radio cells. Should these metal boxes are removed from the building BLD, the configurations of the neighboring radio cells would cause interferences which might disturb the communication with storage equipment and hereby the overall process execution. An optimization would reduce a transmission power of these radio cells by an updated in order to avoid or minimize interferences and ensure continuous system operation.

If smart warehouse systems are replicated on different industrial sites, a learnt model may be transferred to a new industrial site as a baseline for initiating a model on the new site with an already pre-trained model.

In summary, the invention relates to a computer-implemented method for controlling an industrial wireless network operated in an industrial environment including processing facilities and processing materials. Continuous optimization of the radio characteristics ensures seamless operations in changing or dynamic environments wherein relocating materials and/or mobile production equipment have a dynamic impact on the radio characteristics.

The invention allows for estimating a local and site-wide radio signal quality for a near future. Knowledge of a spatial distribution of the signal quality may be advantageously shared with mobile production units or other network elements in order to notify these units expected link restrictions or performance degradation in advance.

A network configuration may be advantageously adopted to changing environments and in parallel to the environmental changes, so that the expected performance degradation is minimized. In general, risks of industrial process operation problems due to communication issues may be significantly reduced.

## Claims

1. A method of controlling a wireless network operated in an industrial environment including processing facilities and processing materials, the wireless network including equipment for operating the wireless network and/or for being connected to the wireless network, the method comprising the steps of:
- retrieving a set of location data including at least one current location of at least one of said processing facilities and/or at least one current location of at least one of said processing materials;
- determining a performance basis indicator by assessing a first spatial model of radio characteristics of the wireless network using at least partially said set of location data;
- determining a set of relocation data including at least one relocation of at least one of said processing facilities and/or at least one relocation of at least one of said processing materials;
- determining a performance destination indicator by assessing a second spatial model of radio characteristics of the wireless network, the second spatial model being created by at least partially modifying said first spatial model using at least partially said set of relocation data;
- identifying a mismatch between said performance basis indicator represented by said first spatial model and said performance destination indicator represented by said second spatial model;
- on an occurrence of said mismatch, determining action data using the first and the second spatial model of radio characteristics of the wireless network, said action data identifying one or more configuration changes to be made to said industrial wireless network in order to reduce said mismatch; and;
- outputting said action data to change a configuration of said industrial wireless network to reduce said mismatch.

2. The method according to claim 1, wherein determining at least one of said relocation data includes predicting and/or deriving said relocation from system models of production process.

3. The method according to one of the aforementioned claims, wherein determining at least one of said relocation includes a linear or non-linear extrapolation based on a continuously retrieved set of location data.

4. The method according to one of the aforementioned claims, wherein at least one parameter of said radio characteristics of the wireless network is indicative of:
- a signal quality;
- a latency;
- a bit error rate;
- a network status;
- a frame error rate; and/or;
- a wireless network channel.

5. The method according to one of the aforementioned claims, wherein one or more system models for representing behavioral data of an industrial process are used for determining the performance base indicator and/or the performance destination indicator.

6. A controller for controlling a wireless network operated in an industrial environment including processing facilities and processing materials, the wireless network including equipment for operating the wireless network and/or for being connected to the wireless network, the controller comprising:
- a location data interface for retrieving a set of location data including at least one current location of at least one of said processing facilities and/or at least one current location of at least one of said processing materials;
- a processor for:
- determining a performance basis indicator by assessing a first spatial model of radio characteristics of the wireless network using at least partially said set of location data;
- determining a set of relocation data including at least one relocation of at least one of said processing facilities and/or at least one relocation of at least one of said processing materials;
- determining a performance destination indicator by assessing a second spatial model of radio characteristics of the wireless network, the second spatial model being created by at least partially modifying said first spatial model using at least partially said set of relocation data;
- identifying a mismatch between said performance basis indicator represented by said first spatial model and said performance destination indicator represented by said second spatial model;
- on the occurrence of a mismatch, determining action data using the first and the second spatial model of radio characteristics of the wireless network, said action data identifying one or more configuration changes to be made to said industrial wireless network to reduce said mismatch; and;
- a network management interface for outputting said action data to change a configuration of said industrial wireless network.
